# EUROPÄISCHE PATENTSCHRIFT

(11) **EP 0 755 725 B1**
(45) Veröffentlichungstag und Bekanntmachung des Hinweises auf die Patenterteilung: **04.11.1998**
(21) Anmeldenummer: 96104082.1
(22) Anmeldetag: 15.03.1996
(51) Int. Cl.: B07B 1/46, B07B 13/04, B07B 13/00, B07B 9/00

(54) **Anordnung zum Trennen nach der Form**
Device for separating according to shape
Dispositif de séparation suivant la forme

(30) Priorität: 22.07.1995 DE 19526841
(43) Veröffentlichungstag der Anmeldung: 29.01.1997
(73) Patentinhaber: BSR Naturstein-Aufbereitungs GmbH, 52224 Stolberg (DE)
(72) Erfinder: Schmitz, Axel, Dipl.-Ing., 52224 Stolberg (DE)
(74) Vertreter: Kohlmann, Kai, Dipl.-Ing.

(56) Entgegenhaltungen:
- US-A- 2 356 295
- US-A- 4 181 603

## Beschreibung

Die Erfindung betrifft eine Anordnung nach dem Oberbegriff des Anspruchs 1.

Dabei ist in Anlehnung an die DIN 52 114 unter der Längserstreckung das größte Maß, daß das Korn in irgendeiner Richtung hat und unter Korndicke der Abstand von zwei parallel angeordneten ebenen Flächen, durch die das Korn gerade noch hindurchbewegbar ist, zu verstehen.

Derartige Feststoffgemische treten beispielsweise im Aufbereitungsprozeß von Beton-Eisenbahnschwellen auf. Sie enthalten neben den annähernd kubischen Betonbruchanteile längliche Fremdkörper, insbesondere Dübel bzw. Dübelbruchstücke, die aus Holz oder Kunststoff bestehen. Die Anordnung ist jedoch keineswegs auf das Trennen derartiger Feststoffgemische beschränkt, sondern ohne weiteres auch für die Trennung von Baumischabfällen oder anderen Feststoffgemischen geeignet, die aus mindestens zwei in der Kornform unterschiedlichen Fraktionen bestehen.

Hinsichtlich der Kornformbewertung wird auf die für Betonzuschlag- und Straßenbaustoffe eingeführte Bewertung mittels des Verhältnisses L_{A} zu L_{C} der Einzelkörner(L_{A}-Länge; L_{C}-Dicke) hingewiesen. Ist die längste Abmessung des Kornes L_{A} kleiner als die dreifache Korndicke L_{C} wird ein Korn als kubisch bezeichnet. Ist indes die längste Abmessung L_{A} größer als die dreifache Korndicke, so wird das Korn nach der Kornbewertung als fehlförmig bzw. im Zusammenhang mit der Erfindung als länglich bezeichnet. Die bei der Aufbereitung von Beton-Eisenbahnschwellen anfallende längliche und kubische Fraktion genügt zwar dieser Definition, jedoch soll die Erfindung durch diese Kornformbewertung nicht beschränkt werden. Die Erfindung ist stets anwendbar wenn die Fraktionen gewisse Mindestunterschiede in ihrer Kornform aufweisen, auf die später noch eingegangen wird.

In der Vergangenheit hat man versucht, Holz- oder Kunststoffdübel aus Betonbruchmaterial durch Windsichtung zu trennen. Die Windsichtung führte jedoch zu unbefriedigenden Trennerfolgen, die die Verkaufsfähigkeit des Produktes in Frage stellten.

Aus der US-A-2 356 295 ist ein Klassierapparat bekannt, mit dem sich relativ lange Werkstücke von relativ kurzen Werkstücken, insbesondere solche mit gleichem Durchmesser, trennen lassen. Hierzu ist oberhalb einer geneigten Siebfläche für den Durchgang der kurzen Werkstücke eine Abdeckung parallel zu der Siebfläche in einem solchen Abstand angeordnet, daß die langen Werkstücke sich nicht aufrichten und damit trotz gleichen Durchmessers wie die kurzen Werkstücke nicht durch die Öffnungen des Siebbodens fallen können.

Ferner geht aus der US-A-4 181 603 ein Sortierapparat für das Trennen von vollständigen, aus einem Körper und einer Kappe bestehenden pharmazeutischen Kapseln von deren Bestandteilen hervor, der eine Öffnungen für den Durchgang der Bestandteile aufweisende Förderplatte mit einem Vibrationsantrieb sowie eine oberhalb der Förderplatte angeordnete obere Platte umfaßt. Die obere Platte ist in einem solchen Abstand zu der Förderplatte angeordnet, daß lediglich die Bestandteile der Kapseln durch die Öffnungen passieren können, während die vollständigen Kapseln auf der Förderplatte zu einer Schütte transportiert werden.

Ausgehend von diesem Stand der Technik liegt der Erfindung die Aufgabe zugrunde, eine Anordnung zum Trennen von mindestens zwei Fraktionen nach der Form vorzuschlagen, die einen guten Trennerfolg gewährleistet und Verstopfungen des Feststoffgemisches in der Anordnung verhindert, so daß der Materialfluß nicht zum Erliegen kommt.

Diese Aufgabe wird bei einer Anordnung der eingangs erwähnten Art durch ein im Abstand zum Siebboden endendes Gehänge aus mehreren Ketten gelöst. Das vorzugsweise aus Gliederketten bestehende Gehänge bietet den Vorteil, daß im Falle von Verstopfungen die Ketten nachgeben und der Materialfluß nicht zum Erliegen kommt. Bei einem Feststoffgemisch, das neben den beiden zu trennenden Fraktionen Überkorn enthält, kann durch diese Maßnahme eine bei Verwendung einer Abdeckplatte erforderliche Vorklassierung entfallen.

Ausgehend von einer Mindestlänge und Mindestdicke der ersten länglichen Fraktion läßt sich bei gegebener Maschenweite und Siebbodendicke der maximale Abstand des Gehänges aus Ketten zur Begrenzung des Freiraums rechnerisch ermitteln. In jedem Fall ist jedoch Voraussetzung für die Verwendung der erfindungsgemäßen Anordnung, daß Feststoffe beider Fraktionen vorliegen und die Längserstreckung L_{A} des Feststoffes der länglichen Fraktion größer als die längste Längserstreckung L_{A} der zweiten kubischen Fraktion ist und der Abstand der Begrenzung des Freiraums mindestens entsprechend der größten Korndicke der zweiten Fraktion, jedoch in jedem Fall kleiner als die geringste Längserstreckung der ersten Fraktion ist, so daß sich das Feststoffgemisch der ersten länglichen Fraktion beim Absieben nicht aufrichten und durch das Sieb fallen kann.

Soll jedoch wegen Überkorn im Feststoffgemisch vorklassiert werden, hat sich ein Sieb, insbesondere ein Schwingsieb mit geringfügig kleinerer Maschenweite als das Sieb mit Freiraumbegrenzung als zweckmäßig herausgestellt. Das weitere Sieb kann raumsparend mit dem Sieb mit Freiraumbegrenzung zu einem Zwei-Deck-Sieb zusammengefaßt sein.

Alternativ kann zur Vorklassierung ein Windsichter vorgeschaltet werden, in dessen Leichtgut, die auf dem Sieb mit Freiraumbegrenzung zu trennenden Fraktionen enthalten sind und in dessen Schwergut das Überkorn des Feststoffgemisches enthalten ist.

Die Vorklassierung mittels Windsichter gewährleistet, daß die längliche Fraktion bei der Betonschwellenaufbereitung nicht in das Überkorn gerät, was bei einer Sieb-Vorklassierung nicht auszuschließen ist.

Eine weitere Verbesserung des Trennerfolges, ein höherer Durchsatz sowie eine erhöhte Zuverlässigkeit läßt sich durch ein in das Sieb mit Freiraumbegrenzung, insbesondere in dessen Siebboden integriertes Feinsieb für das Feinkorn der zweiten Fraktion erzielen.

Nachfolgend wird die Erfindung an dem Beispiel der Entfernung von Holz- oder Kunststoffdübeln aus Betonbruchmaterial, das bei der Zerkleinerung von Beton-Eisenbahnschwellen anfällt, des näheren anhand der Figuren erläutert.

Es zeigen
- Fig. 1: Eine Anordnung mit separater Sieb-Vorklassierung,
- Fig. 2: eine alternative Anordnung mit Vorklassierung durch Zwei-Deck-Sieb,
- Fig. 3: eine erfindungsgemäße Anordnung ohne Vorklassierung mit einem Gehänge aus mehreren Ketten,
- Fig. 4: eine Detailansicht einer im Abstand a zum Siebboden angeordneten Abdeckplatte entsprechend Fig. 1, wobei Figuren 1, 2 und 4 keine Ausführungsbeispiele der Erfindung darstellen.

Über eine in den Zeichnungen nicht dargestellte Aufgabeschwingrinne werden die Betonschwellen in eine Prallmühle gefördert. Bei der Zerkleinerung der Beton-Eisenbahnschwellen in der Prallmühle entsteht ein Feststoffgemisch mit Korngrößen im Bereich von 0 mm bis etwa 80 mm. Außerdem fallen Stahlplatten- und Schrauben, Kunststoff- und Gummiplatten sowie Holz- bzw. Kunststoffdübel der Abmessungen ⌀ 50 mm x 160 mm an. Je nach Einstellung des Spaltes in der Prallmühle werden auch die Holzdübel zerkleinert. In der Regel werden sie längs gespalten, so daß die Länge erhalten bleibt und sich lediglich deren Querschnitt reduziert.

Als Endprodukt der Aufbereitung soll ein Gemisch der Körnung 0/45 herauskommen, das frei von den genannten Fremdstoffen, insbesondere Dübeln sein muß.

Über einen Magnetabscheider werden zunächst die Stahlteile aus dem Feststoffgemisch entfernt.

Sodann wird das Feststoffgemisch über ein Förderband (1) auf ein Sieb (2) zur Vorklassierung aufgegeben. Die Fraktion 0/45 wird auf dem als Schwingsieb ausgebildeten Sieb (2) mit der Maschenweite 50 mm x 50 mm abgesiebt. Im Überkorn fallen neben der Fraktion 45/80 die Kunststoff- und Gummiplatten sowie einige Dübel (13) an. Die Dübel (13) und deren Bruchstücke gehen jedoch nur teilweise in das Überkorn über, da sich während des Transports auf dem Siebboden(2) zahlreiche Dübel (13) bzw. deren Bruchstücke aufrichten und durch die Sieböffnungen (3) hindurch fallen.

Die Fraktion 0/45 des Feststoffgemisches sowie einige Dübel (13) und deren Bruchstücke, die durch die Sieböffnungen (3) hindurchgefallen sind, gelangen auf ein weiteres Förderband (5), das das aus zwei Fraktionen bestehende Feststoffgemisch auf ein weiteres Sieb (6) aufgibt. Das Sieb (6) weist im Aufgabenbereich eine geringere Maschenweite von etwa 10 mm auf, das der Vorabsiebung des Feinkorns der Fraktion 0/45 dient. Unterhalb der Aufgabe beträgt die Maschenweite etwa 52 mm x 52 mm.

In einem Abstand a zum Siebboden (7) befindet sich eine Abdeckplatte (8), an deren Stelle erfindungsgemäß das Kettengehänge angeordnet ist, die den Freiraum oberhalb des Siebbodens (7) zumindest im Bereich der Sieböffnungen (9) mit einer Maschenweite von 52 mm begrenzt. Der Abstand a ist dabei so gewählt, daß sich die Dübel (13) bzw. deren Teile in dem Freiraum zwischen Siebboden (7) und Abdeckplatte (8), an deren Stelle erfindungsgemäß das Kettengehänge angeordnet ist, beim Transport auf dem Siebboden (7) nicht aufrichten und durch die Sieböffnungen (9) fallen können.

Der Abstand a ist beispielsweise 60 mm, so daß die Fraktion 0/45 ungehindert in dem Freiraum zwischen Siebboden (7) und Abdeckplatte (8), an deren Stelle erfindungsgemäß das Kettengehänge angeordnet ist, durchlaufen kann. Ein Aufrichten der 160 mm langen Dübel (13) ist jedoch ausgeschlossen. Folglich bleiben die Dübel (13) auf dem Siebboden (7) und werden von dem Mineralgemisch 0/45 getrennt.

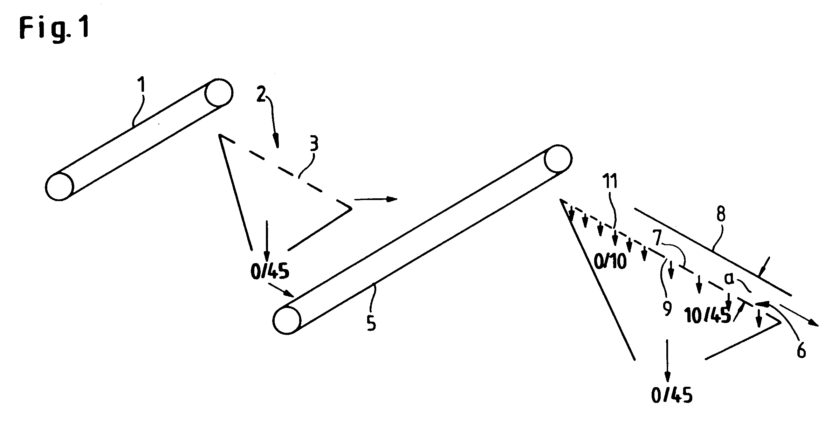

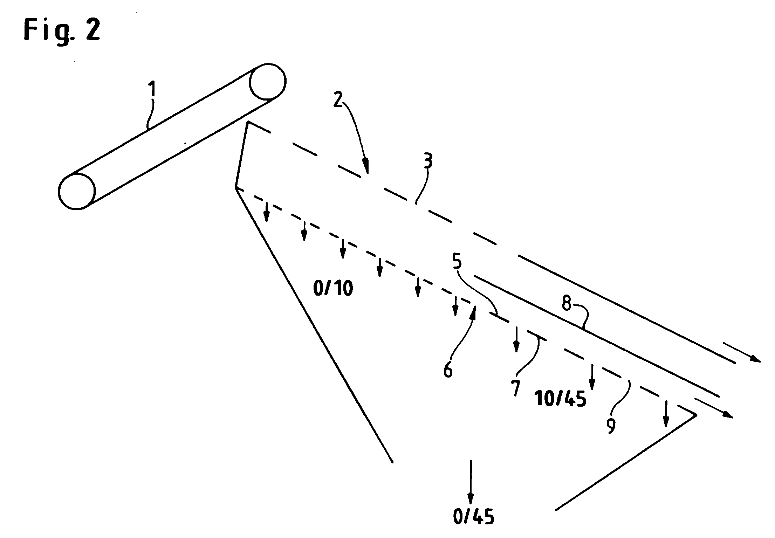

Fig. 2, in der funktionsgleiche Teile mit gleichen Positionsziffern bezeichnet sind, zeigt eine vergleichbare Anordnung zum Trennen von einem aus mindestens zwei unterschiedlichen Fraktionen bestehenden Feststoffgemisch. Der Hauptunterschied der Anordnung nach Fig. 2 gegenüber der nach Fig. 1 besteht darin, daß das Sieb (2) zur Vorklassierung mit dem Sieb (6) zu einem Zwei-Deck-Sieb zusammengefaßt ist. Zwischen dem Sieb (2) und dem Sieb (6) ist die Abdeckplatte (8), an deren Stelle erfindungsgemäß das Kettengehänge angeordnet ist, im Bereich der Öffnungen (9) des Siebes (6) angeordnet.

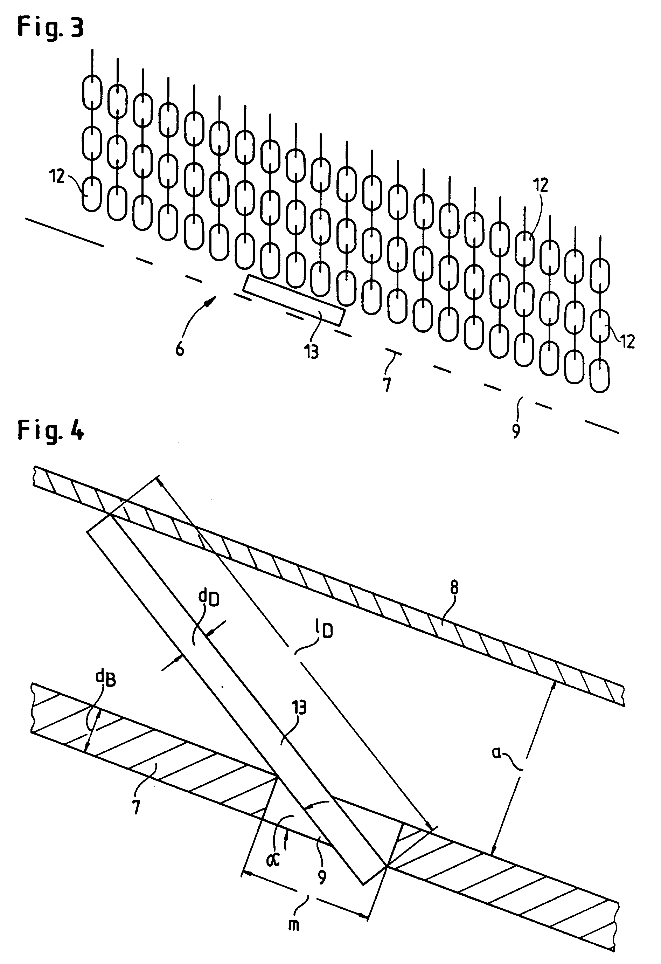

Fig. 3 zeigt eine Detailansicht des Kettengehänges (12), das anstelle der an sich bekannten Abdeckplatten angeordnet wird und den Freiraum oberhalb des Siebbodens (7) begrenzt. Das Gewicht des vorzugsweise aus Gliederketten hergestellten Gehänges (12) verhindert das Aufrichten der Dübel (13), gibt jedoch bei Verstopfungen in dem durch das Kettengehänge (12) und den Siebboden (7) gebildeten Zwischenraum ohne weiteres nach, so daß Störungen des Materialflußes weitgehend ausgeschlossen sind.

Die in den Figuren 1 und 2 gezeigten Vorabsiebung können durch den Einsatz des Kettengehänges auch bei Fraktionen mit Überkorn entfallen, ohne daß die Betriebssicherheit eingeschränkt würde.

Fig. 4 zeigt schließlich eine Ansicht einer im Abstand a zum Siebboden (7) angeordneten, an sich bekannte Abdeckplatte(8), an deren Stelle erfindungsgemäß das Kettengehänge angeordnet ist. Der Abstand a ist dort grenzwertig dargestellt. Bei gegebener Dübellänge l_{D} und Dübeldicke d_{D} könnte der gezeigte Dübel (13) in Figur 4 bei gegebener Maschenweite m im ungünstigsten Fall noch durch die Sieböffnung (9) zum Mineralgemisch 0/45 gelangen. Wird allerdings der Abstand a geringfügig verkleinert, ist es ausgeschlossen, daß die Dübel (13) durch die Sieböffnungen (9) in das Mineralgemisch 0/45 gelangen, wenn sämtliche weiteren Dübel die in Fig. 4 gezeigten Mindestabmessungen d_{d} und l_{d} aufweisen.

Fig. 4 verdeutlicht, daß bei gegebener Dübelgröße der maximale Abstand der Abdeckplatte (8) bzw. des erfindungsgemäß vorgesehenen Kettengehänges (12) u. a. auch von der Siebbodendicke d_{b} abhängt. Aus den gegebenen Größen d_{d}, l_{d}, d_{b}, m und α läßt sich der Abstand a und damit die obere Korngrenze der zweiten Fraktion berechnen.

## Patentansprüche

1. Anordnung zum Trennen von einem aus mindestens zwei unterschiedlichen Fraktionen bestehenden Feststoffgemisch nach der Form, wobei die erste Fraktion länglich und die zweite Fraktion annähernd kubisch ist und die Längserstreckung des Feststoffes der ersten Fraktion größer als die längste Längserstreckung der zweiten Fraktion ist, die einen Siebboden (7) mit einer Maschenweite für den Durchgang der zweiten Fraktion und in einem Abstand (a) zum Siebboden (7) angeordnete Mittel aufweist, die den Freiraum oberhalb des Siebbodens (7) zumindest im Bereich der Sieböffnungen (9) begrenzen, wobei der Abstand (a) mindestens der größten Korndicke der zweiten Fraktion entspricht, jedoch in jedem Fall kleiner als die geringste Längserstreckung der ersten Fraktion ist, so daß sich das Feststoffgemisch der ersten Fraktion beim Absieben nicht aufrichten und durch den Siebboden (7) fallen kann, **dadurch gekennzeichnet**, daß der Freiraum oberhalb des Siebbodens (7) durch ein im Abstand zum Siebboden (7) endendes Gehänge (12) aus mehreren Ketten begrenzt ist.

2. Anordnung zum Trennen von Feststoffgemisch nach Anspruch 1, **dadurch gekennzeichnet**, daß die Ketten als Gliederketten ausgebildet sind.

3. Anordnung zum Trennen von Feststoffgemisch nach Anspruch 1 oder 2, **dadurch gekennzeichnet**, daß dem Siebboden (7) mit Freiraumbegrenzung eine Vorklassierung vorgeschaltet ist.

4. Anordnung zum Trennen von Feststoffgemisch nach Anspruch 3, **dadurch gekennzeichnet**, daß die Vorklassierung ein Sieb (2) mit geringfügig kleinerer Maschenweite als das Sieb (6) mit Freiraumbegrenzung umfaßt und beide Siebe (2,6) vorzugsweise zu einem Zwei-Deck-Sieb zusammengefaßt sind.

5. Anordnung zum Trennen von Feststoffgemisch nach Anspruch 3, **dadurch gekennzeichnet**, daß die Vorklassierung einen Windsichter umfaßt, in dessen Leichtgut die auf dem Sieb (6) mit Freiraumbegrenzung zu trennenden Fraktionen enthalten sind und in dessen Schwergut das Überkorn des Feststoffgemisches enthalten ist.

6. Anordnung zum Trennen von Feststoffgemisch nach einem der Ansprüche 3-5, **dadurch gekennzeichnet**, daß dem Sieb (6) mit Freiraumbegrenzung ein insbesondere in dessen Siebboden integriertes Feinsieb für das Feinkorn der zweiten Fraktion vorgeschaltet ist.

## Claims

1. An arrangement for separating according to shape, solid matter mixtures comprising at least two different fractions, with the first fraction being elongated and the second fraction being approximately cuboid, with the longitudinal extension of the solid matter of the first fraction being greater than the greatest longitudinal extension of the second fraction, comprising a sieve bottom (7) with a mesh aperture for the passage of the second fraction and means spaced apart from the sieve bottom (7) by a distance (a) which said means limit the clearance above the sieve bottom (7) at least in the area of the sieve apertures (9), with the distance (a) being at least equivalent to the largest particle thickness of the second fraction, but in any case smaller than the smallest longitudinal extension of the first fraction, so that during sieving the solid matter mixture of the first fraction cannot assume an upright position and fall through the sieve bottom (7), characterised in that the clearance above the sieve bottom (7) is delimited by a suspension arrangement (12) comprising several chains ending at a distance from the sieve bottom (7).

2. An arrangement for separating solid matter mixtures according to claim 1, characterised in that the chains are link chains.

3. An arrangement for separating solid matter mixtures according to claim 1 or 2, characterised in that the sieve bottom (7) with clearance limitation is topped by a pre-screening device.

4. An arrangement for separating solid matter mixtures according to claim 3, characterised in that pre-screening comprises a sieve (2) with slightly smaller mesh apertures than that of sieve (6) with clearance limitation, and that preferably both sieves (2, 6) are combined in a two-deck sieve.

5. An arrangement for separating solid matter mixtures according to claim 3, characterised in that pre-screening comprises an air separator, the light matter of which comprises the fractions to be separated on the sieve (6) with clearance limitation, and the heavy matter of which contains the oversize particles of the solid matter mixture.

6. An arrangement for separating solid matter mixtures according to one of claims 3-5, characterised in that topped to sieve (6) with clearance limitation is a fine sieve for the fine particles of the second fraction, in particular a fine sieve incorporated in its sieve bottom.

## Revendications

1. Dispositif pour séparer un mélange de matière solide comprenant au moins deux fractions différentes en fonction de la forme, la première fraction étant de forme allongée et la deuxième fraction de forme approximativement cubique et l'étirement longitudinal de la matière solide de la première fraction étant supérieur à l'étirement longitudinal maximum de la deuxième fraction, qui présente un fond de tamis (7) avec une ouverture de maille pour le passage de la deuxième fraction et des moyens disposés à une distance (a) du fond du tamis (c), qui délimitent l'espace libre au-dessus du fond du tamis (7) au moins dans la zone des ouvertures du tamis (9), l'espacement (a) correspondant au moins à l'épaisseur de grain maximale de la deuxième fraction, mais étant dans tous les cas inférieur à l'étirement longitudinal minimal de la première fraction, de sorte que le mélange de matière solide de la première fraction ne peut pas se redresser lors du tamisage et peut tomber par le fond du tamis (7), caractérisé en ce que l'espace libre au-dessus du fond du tamis (7) est délimité par une suspension (12) se terminant à distance du fond du tamis (7) et composée de plusieurs chaînes.

2. Dispositif pour séparer le mélange de matière solide selon la revendication 1, caractérisé en ce que les chaînes sont conçues comme des chaînes à maillons.

3. Dispositif pour séparer le mélange de matière solide selon la revendication 1 ou 2, caractérisé en ce qu'un préclassement est disposé en amont du fond du tamis (7) avec une délimitation de l'espace libre.

4. Dispositif pour séparer le mélange de matière solide selon la revendication 3, caractérisé en ce que le préclassement comprend un tamis (2) avec une ouverture de maille légèrement inférieure au tamis (6) avec une délimitation de l'espace libre et deux tamis (2,6) sont regroupés de préférence en un tamis à deux niveaux.

5. Dispositif pour séparer le mélange de matière solide selon la revendication 3, caractérisé en ce que le préclassement comprend un séparateur à vent, dont la partie légère comprend les fractions qui doivent être séparées sur le tamis (6) avec délimitation de l'espace libre et dont la partie lourde comprend le surclassé du mélange de matière solide.

6. Dispositif pour séparer le mélange de matière solide selon l'une quelconque des revendications 3 à 5, caractérisé en ce que le tamis (6) avec délimitation de l'espace libre est placé en aval d'un tamis fin intégré en particulier dans le fond de tamis et destiné aux grains fins de la deuxième fraction.
